# EUROPÄISCHE PATENTSCHRIFT

(11) **EP 3 583 323 B1**
(45) Veröffentlichungstag und Bekanntmachung des Hinweises auf die Patenterteilung: **30.12.2020**
(21) Anmeldenummer: 18701419.6
(22) Anmeldetag: 15.01.2018
(51) Int. Cl.: F16C 11/06, F16J 15/52

(54) **DICHTUNGSBALG FÜR EIN KUGELGELENK UND KUGELGELENK MIT EINEM SOLCHEN DICHTUNGSBALG**
SEALING BELLOWS FOR A BALL-AND-SOCKET JOINT COMPRISING SUCH A SEALING BELLOWS
SOUFFLET D'ÉTANCHÉITÉ POUR UNE ARTICULATION À ROTULE ET ARTICULATION À ROTULE ÉQUIPÉE D'UN TEL SOUFFLET D'ÉTANCHÉITÉ

(30) Priorität: 15.02.2017 DE 102017202410
(43) Veröffentlichungstag der Anmeldung: 25.12.2019
(73) Patentinhaber: ZF Friedrichshafen AG, 88046 Friedrichshafen (DE)
(72) Erfinder: SOKOLIHS, Dirk, 32457 Porta Westfalica (DE); PETERSEN, Uwe, 32339 Espelkamp (DE)
(74) Vertreter: ZF Friedrichshafen AG
(86) Internationale Anmeldenummer: PCT/EP2018/050823
(87) Internationale Veröffentlichungsnummer: WO 2018/149572

(56) Entgegenhaltungen:
- DE-A1- 19 727 494
- DE-C- 925 328
- DE-C1- 19 850 378
- FR-A1- 2 350 500
- US-A- 2 835 521
- US-A- 3 248 955
- US-A- 5 568 930

## Beschreibung

Die Erfindung betrifft einen Dichtungsbalg für ein Kugelgelenk gemäß dem Oberbegriff von Patentanspruch 1 und ein Kugelgelenk mit einem solchen Dichtungsbalg gemäß dem Oberbegriff von Patentanspruch 13, einem Verfahren zur Montage eines solchen Kugelgelenks gemäß Patentanspruch 15 sowie einer Verwendung eines solchen Dichtungsbalgs und/oder eines solchen Kugelgelenks gemäß Patentanspruch 16.

Dichtungsbälge für Kugelgelenke sind aus dem Stand der Technik bekannt, wobei derartige Kugelgelenke häufig bei Fahrwerkteilen oder Lenkungsteilen von Kraftfahrzeugen eingesetzt werden. Dichtungsbälge von abschmierbaren Kugelgelenken, beispielsweise für Nutzfahrzeuge, weisen häufig Schmiermittelaustrittsöffnungen auf, aus denen verbrauchtes Schmierfett austreten kann. Derartige Schmiermittelaustrittsöffnungen sind vom Prinzip her als selbstschließende Rückschlagventile aufgebaut, durch die verbrauchtes Schmierfett aus dem Dichtungsbalg austreten kann, aber ein Eindringen von Schmutz und/oder Feuchtigkeit von außen in den Dichtungsbalg vermieden wird.

Ein Kugelgelenk mit einem Dichtungsbalg, der eine derartige Schmiermittelaustrittsöffnung aufweist, ist aus der DE 197 27 494 A1 bekannt. Verbrauchtes Schmiermittel kann dabei erst nach Überschreiten eines Überdrucks innerhalb des aus einem Elastomermaterial gebildeten Dichtungsbalgs aus dessen Schmiermittelaustrittsöffnung austreten. Diese ist als ein Schlitz ausgebildet, der eine Wandung des Dichtungsbalgs durchsetzt. Der Schlitz ist aufgrund von elastischen Eigenschaften des Dichtungsbalgmaterials selbstschließend, d. h. dass sich der Schlitz nach einem Austritt von verbrauchtem Schmierfett selbstständig wieder schließt. Zum Öffnen des Schlitzes ist der vorgenannte Überdruck erforderlich, der eine Trennung von Wandungsabschnitten des Schlitzes bewirkt, die im Normalbetrieb des Kugelgelenks, d. h. wenn dieses nicht gerade nachgeschmiert wird, berührend aneinanderliegen.

Der erforderliche Überdruck wird durch Nachschmieren des Kugelgelenks über einen Schmiernippel aufgebracht, wobei das verbrauchte Schmiermittel verdrängt und aus der Schmiermittelaustrittsöffnung herausgedrückt wird.

Liegen die vorgenannten Wandungsabschnitte des Schlitzes auch im unmontierten Zustand des Dichtungsbalgs berührend aneinander, kann dies im Rahmen der Montage des Kugelgelenks zu unerwünschten Schmiermittelverunreinigungen führen. Derartige Schmiermittelverunreinigungen können auftreten, wenn ein mit einer Schmiermittel-Erstbefüllung versehenes Kugelgelenk über einen Kugelzapfen desselben mit einem zapfenseitigen Anschlussbauteil, beispielsweise einem Lenkhebel, verbunden wird. Solche Verbindungen sind häufig als Kegelverbindungen ausgeführt, bei denen der Kugelzapfen einen konischen Verbindungsabschnitt, der auch als kegeliger Abschnitt bezeichnet wird, und das zapfenseitige Bauteil eine formkorrespondierende konische Aufnahmebohrung aufweist. Infolge eines mit der Montage einhergehenden axialen Zusammendrückens des Dichtungsbalgs kann aus einer zapfenseitigen Öffnung desselben Schmiermittel austreten, und zwar über einen zu Beginn des axialen Zusammendrückens noch offenen Ringspalt zwischen dem konischen Verbindungsabschnitt des Kugelzapfens und der zapfenseitigen Öffnung des Dichtungsbalgs. Dies kann beispielsweise der Fall sein, wenn der vorgenannte Ringspalt während des Zusammendrückens des Dichtungsbalgs durch Schmierfett einer Schmiermittel-Erstbefüllung des Kugelgelenks verstopft ist.

In diesem Fall wird eingeschlossene Luft, die sich möglicherweise innerhalb des Dichtungsbalgs befindet, daran gehindert, über den Ringspalt zu entweichen. Bei einem weiteren Zusammendrücken des Dichtungsbalgs wird die eingeschlossene Luft komprimiert, wodurch sich innerhalb des Dichtungsbalgs ein Überdruck aufbaut. Durch diesen Überdruck wird das den Ringspalt verstopfende Schmierfett aus demselben in Richtung des konischen Verbindungsabschnitts des Kugelzapfens herausgedrückt, weil der hierzu erforderliche Überdruck geringer ist als der zum Öffnen des Schlitzes erforderliche Überdruck. Ein mit Schmierfett verunreinigter konischer Verbindungsabschnitt ist allerdings unerwünscht, weil dadurch der Reibkoeffizient der Kegelverbindung zwischen dem konischen Verbindungsabschnitt des Kugelzapfens und dem zapfenseitigen Anschlussbauteil unzulässig reduziert wird. Dies kann zur Folge haben, dass die Kegelverbindung nicht mehr in der Lage ist, auf Basis einer ungeschmierten Kegelverbindung ermittelte Kräfte und/oder Momente zu übertragen. Derartige Schwachstellen bedeuten gerade bei Fahrwerkteilen oder Lenkungsteilen von Kraftfahrzeugen ein Sicherheitsrisiko.

Die DE 198 50 378 C1 offenbart einen Dichtungsbalg für ein Kugelgelenk gemäß dem Oberbegriff des Anspruchs 1 mit Stützelement, welcher einerseits an einem Gelenkzapfen und andererseits an einem den Gelenkzapfen allseits beweglich aufnehmenden Gelenkgehäuse dichtend anliegt und durch das Stützelement gegen ein Verrutschen auf dem Gelenkzapfen gesichert ist, wobei zwischen der Innenfläche des Dichtungsbalgs und der Lagerung des Gelenkzapfens in dem Gelenkgehäuse eine Kammer zur Aufnahme von Schmiermittel ausgebildet ist. Das Stützelement ist ein aus einem elastischen Kunststoff bestehender Stützring, der unter den Dichtungsbalg auf den sich in diesem Bereich konisch erweiternden Gelenkzapfen aufgeschoben ist und eine Ausformung in Form eines umlaufenden Ringbundes besitzt, welche für den in diesem Bereich an dem Stützring fest anliegenden Dichtungsbalg eine Stützfläche bildet, während der Gelenkzapfen gegenüber dem aufgeschobenen Stützring verdrehbar ist, wobei der Ringbund des Stützringes gleichzeitig eine die Kammer zur Aufnahme des Schmiermittels verschließende Überdruckablassvorrichtung bildet, die beim Überschreiten eines durch ihre Eigenelastizität bestimmten Schmiermitteldruckes in Richtung der Mittelachse des Gelenkzapfens gedrückt wird und dabei einen das Austreten von Schmiermittel ermöglichenden Kanal freigibt.

Die US 5 568 930 A beschreibt eine Verbindungsanordnung, die ein Gehäuse, einen sich von dem Gehäuse erstreckenden und relativ zu diesem bewegbaren Kugelzapfen, einen Dichtungsbalg mit einem mit dem Gehäuse verbundenen ersten Endabschnitt und einem mit dem Kugelzapfen verbundenen zweiten Endabschnitt, wobei der Dichtungsbalg mit einer sich durch einen der Endabschnitte erstreckenden Ablassöffnung versehen ist und zusammen mit dem Gehäuse und dem Kugelzapfen eine ein Schmiermittel enthaltende Kammer begrenzt, und ein den einen Endabschnitt gegen das Gehäuse oder den Kugelzapfen drückendes Haltemittel (62) aufweist, mittels welchem die Ablassöffnung verschlossen wird, wenn der Schmiermitteldruck in der Kammer kleiner ist als ein vorbestimmter Druck ist, wobei das Haltemittel und der eine Endabschnitt unter Einfluss vom Schmiermitteldruck relativ zueinander beweglich sind, sodass Schmiermitteldruck durch die Ablassöffnung abgelassen wird, wenn dieser den vorbestimmen Druck übersteigt.

Die DE 925 328 C offenbart eine elastische Abdichtung für Kugelgelenke, wobei die Gummimanschette an dem am Kugelzapfen anliegenden Ende mit Einrichtungen versehen ist, die ein Hochrutschen der unteren Manschettenwulst verhindern. Ferner ist die Manschette mit einem Ansatz versehen, der eine zu einem Kanal führende Öffnung erhält. Der Ansatz kann durch eine Blechhaube abgedeckt sein, sodass eine Fettpresse od. dgl. angesetzt werden kann. Somit ist es möglich, den Innenraum der Manschette und damit das Innere des Kugelgelenkes mit Fett zu versorgen.

Die FR 2 350 500 A1 beschreibt eine Lagereinrichtung für ein Kugelgelenk, welches ein Sockelteil mit einer im Wesentlichen zylindrischen Aussparung, eine in dem Sockelteil angeordnete Kugel eines Kugelzapfens und zwei Lagerringe mit einer Kugelfläche umfasst. Ein flexibler Dichtungskragen befindet sich an der Oberseite der Anordnung und besitzt einen Halsabschnitt, der auf einem sich verjüngenden Abschnitt des Kugelzapfens aufsitzt. Ein Schürzenabschnitt des Dichtungskragens wird von einem Ring auf der Oberseite des Sockelteils festgehalten. Der Dichtungskragen besitzt eine Reihe von U-förmigen Einschnitten. Dadurch ergeben sich Zungen um den Umfang zwischen dem Hals und der Schürze herum, die ein Entweichen des Druckes in der Anordnung und von Schmiermittel erlauben, wenn solches durch einen geeigneten Schmiernippel eingeführt wird.

Die US 3 248 955 A offenbart einen Dichtungsbalg für ein Kugelgelenk, mit einem einen Innenraum umschließenden, elastischen Balgkörper, einer an einem Ende des Balgkörpers vorgesehenen, ringförmigen Lippe, die in axialer Richtung an einem Bauteil anliegt, einer in das eine Ende des Balgkörpers eingebetteten Manschette, die eine radiale Lagerfläche mit axialen Rillen und eine an dem Bauteil anliegende, axiale Lagerfläche mit radialen Rillen aufweist, die in die axialen Rillen übergehen, sodass die Rillen den Balginnenraum mit einem von der Lippe umringten Ringraum verbinden. Falls in dem Innenraum zu viel Schmierststoff vorhanden ist, kann dieser durch die Rillen in den Ringraum strömen und von dort mittels der Lippe abgegeben werden.

Aufgabe der Erfindung ist es, einen Dichtungsbalg für ein Kugelgelenk bereitzustellen, der prozesssicher und insbesondere ohne Gefahr unzulässiger Schmiermittelverunreinigungen montiert werden kann. Eine weitere Aufgabe der Erfindung ist es, eine alternative Ausführungsform bereitzustellen.

Diese Aufgabe wird gemäß der vorliegenden Erfindung gelöst durch ein Kugelgelenk mit den Merkmalen des unabhängigen Anspruchs 1.

Bevorzugte Ausführungsformen und Weiterbildungen sind Gegenstand der Unteransprüche. Weitere Merkmale und Details der Erfindung ergeben sich aus der Beschreibung und den Zeichnungsfiguren.

Die Erfindung sieht demnach ein Kugelgelenk mit einem Dichtungsbalg vor, wobei der Dichtungsbalg einen gehäuseseitigen Dichtbereich und einen davon beabstandeten zapfenseitigen Dichtbereich aufweist. Weiterhin weist der Dichtungsbalg eine zwischen dem gehäuseseitigen Dichtbereich und dem zapfenseitigen Dichtbereich angeordnete und zugleich eine Wandung des Dichtungsbalgs durchsetzende Austrittsöffnung auf. Erfindungsgemäß ist die Austrittsöffnung in einem unmontierten Zustand des Dichtungsbalgs offen. Die Austrittsöffnung weist zwei parallel zueinander ausgerichtete und voneinander beabstandete Teilflächen auf und ist im nicht montierten Zustand des Kugelgelenks offen und im montierten Zustand des Kugelgelenks geschlossen, wobei die obere Teilfläche und die untere Teilfläche der Austrittsöffnung im montierten Zustand des Kugelgelenks berührend aneinander anliegen.

Auf diese Weise kann während der Montage des Kugelgelenks in dem Dichtungsbalg eingeschlossene Luft über die Austrittsöffnung, die in diesem Fall als Luftaustrittsöffnung fungiert, entweichen und somit eine unzulässige Schmiermittelablagerung auf einem kegeligen Abschnitt eines Kugelzapfens des Kugelgelenks sicher vermieden werden. Insbesondere handelt es sich bei dem Dichtungsbalg um einen Kugelgelenk-Dichtungsbalg und ausdrücklich nicht um einen Dichtungsbalg für eine Gelenkwelle, eine Antriebswelle, ein Wälzlager, ein Gleichlaufgelenk oder dergleichen. Unter einem Kugelgelenk ist in diesem Zusammenhang ein Gleitlager mit einem Gehäuse und einem darin dreh- und schwenkbeweglich gelagerten Kugelzapfen zu verstehen. Bevorzugt ist das Kugelgelenk für einen Verbau in einem Kraftfahrzeug geeignet, insbesondere für einen Verbau in einem Fahrwerk und/oder einem Lenksystem eines Kraftfahrzeugs. Der Kugelzapfen ist aus einer in dem Gehäuse gelagerten

Gelenkkugel und einem starr mit dieser verbundenen Zapfen gebildet, wobei der Zapfen abschnittsweise konisch ausgebildet ist und sich aus einer zapfenseitigen Gehäuseöffnung aus dem Gehäuse heraus erstreckt. Der Kugelzapfen kann einstückig oder mehrteilig als sogenannter gebauter Kugelzapfen mit separater Gelenkkugel und einem starr mit dieser verbundenen, separaten Zapfen ausgeführt sein. Der Dichtungsbalg liegt mit seinem gehäuseseitigen Dichtbereich im Bereich der zapfenseitigen Gehäuseöffnung dichtend an dem Gehäuse an. Mit seinem zapfenseitigen Dichtbereich liegt der Dichtungsbalg im montierten Zustand des Kugelgelenks dichtend an dem Zapfen des Kugelzapfens an.

Der gehäuseseitige Dichtbereich des Dichtungsbalgs umschließt eine gehäuseseitige Öffnung desselben vollständig umlaufend. Ebenso umschließt der zapfenseitige Dichtbereich eine zapfenseitige Öffnung des Dichtungsbalgs. Neben diesen Öffnungen und der Austrittsöffnung weist der Dichtungsbalg keine weiteren Öffnungen auf. Insbesondere ist der Dichtungsbalg aus einem elastisch verformbaren Material gebildet, zum Beispiel aus weichem Polymermaterial wie etwa Naturkautschuk oder thermoplastisches Elastomer auf Polyester- oder Polyurethanbasis. Die Wandung des Dichtungsbalgs besteht insbesondere aus einlagigem Vollmaterial. Mit dem nicht montierten Zustand des Dichtungsbalges ist die Form des Dichtungsbalgs gemeint, wenn dieser als entspanntes Einzelteil, also ohne Einwirkung äußerer Kräfte, vorliegt. Vorzugsweise ist der Dichtungsbalg bis auf die Austrittsöffnung rotationssymmetrisch ausgebildet und der gehäuseseitige Dichtbereich von dem zapfenseitigen Dichtbereich parallel beabstandet. Insbesondere weist der Dichtungsbalg zwischen dem gehäuseseitigen Dichtbereich und dem zapfenseitigen Dichtbereich einen einzigen bauchigen Bereich auf. Es sind aber auch mehrere bauchige Bereiche möglich, die sich mit einem oder mehreren taillierten Bereichen abwechseln.

Insbesondere ist der Balgschutz elastisch und zugleich formstabil ausgebildet. Unter einer elastischen Ausbildung ist im Sinne der Erfindung zu verstehen, dass der Dichtungsbalg Rückstellungseigenschaften aufweist, die bewirken, dass der Dichtungsbalg nach einer Verformung, beispielsweise nach einem Zusammendrücken in Axialrichtung des Dichtungsbalgs, das Bestreben hat, in dessen Ursprungslage zurückzukehren. Mit einer formstabilen Ausbildung ist in diesem Zusammenhang gemeint, dass der Dichtungsbalg als Einzelteil in sich zumindest so stabil ist, dass dieser nach einem Abstellen auf einer ebenen Fläche bedingt durch dessen Eigengewicht nicht in sich zusammenfällt. Unter der Angabe, dass die Austrittsöffnung im nicht montierten Zustand des Dichtungsbalgs geöffnet ist, soll zunächst einmal nur verstanden werden, dass diese nicht, wie aus dem Stand der Technik bekannt, geschlossen ausgebildet ist, sondern einen freien Querschnitt aufweist. Der freie Querschnitt ist beispielsweise für einen freien Durchtritt von Luft geeignet, ohne das hierzu eine Druckdifferenz erforderlich ist. Bevorzugt ist die Austrittsöffnung im nicht montierten Zustand des Dichtungsbalgs darüber hinaus auch durchlässig für Schmiermittel, wobei dieses in der Regel aufgrund der relativ hohen Viskosität von Schmierfett für Kugelgelenke nicht allein aufgrund dessen Schwerkraft durch die Austrittsöffnung hindurchfließt.

Bevorzugt weist die Austrittsöffnung eine unbearbeitete Innenumfangsfläche auf, die eine Kontur der Austrittsöffnung definiert. Insbesondere umschließt die Innenumfangsfläche den freien Querschnitt der Austrittsöffnung. Vorzugsweise ist die Innenumfangsfläche urgeformt, insbesondere spritzgegossen. Unter einer unbearbeiteten Innenumfangsfläche ist in diesem Zusammenhang zu verstehen, dass diese im Rohzustand verbleibt, also beispielsweise nach dem Spritzgießen keine weitere Bearbeitung erfährt. Eine Austrittsöffnung mit einer unbearbeiteten Innenumfangsfläche kann besonders günstig hergestellt werden, wenn sie urgeformt ist, beispielsweise spritzgegossen. In diesem Fall kann der Dichtungsbalg zusammen mit der Austrittsöffnung in einem einzigen Urform-Arbeitsgang hergestellt werden.

Aus dem Stand der Technik bekannte, als Schlitze ausgebildete Schmiermittelaustrittsöffnungen werden in der Regel durch ein separates, auf ein Urformen folgendes, trennendes Fertigungsverfahren, insbesondere durch ein Schneiden, in die Wandung des Dichtungsbalgs eingebracht. Diese Ausführungen haben den Nachteil, dass die Enden der eingeschnittenen Schlitze wie Kerben im Sinne der Festigkeitslehre wirken. In Kraftfahrzeugen, insbesondere in Fahrwerken und/oder Lenksystemen von Kraftfahrzeugen, verbaute Dichtungsbälge sind im Fahrbetrieb unterschiedlichen Beanspruchungen ausgesetzt. Schwenkungen des Kugelzapfens führen zu wechselnden Zug- und Druckbeanspruchungen in dem Schlitz. Drehbewegungen des Kugelzapfens bewirken eine Torsionsbeanspruchung des Dichtungsbalges und in den Enden des Schlitzes darüber hinaus eine Scherbeanspruchung. Die vorgenannten Beanspruchungsarten werden während des Fahrbetriebs durch Schwingungen überlagert. Dies führt bei eingeschnittenen Schlitzen an deren Enden häufig zu erhöhten Kerbspannungen infolge derer der Schlitz ungewollt weiter einreißen kann. Ist die Austrittsöffnung dagegen urgeformt, insbesondere spritzgegossen ausgebildet, tritt dieses Problem nicht oder zumindest stark reduziert auf, weil die elastomere oder elastomerähnliche Molekularstruktur des Dichtungsbalgs hier nicht durch Einschneiden zerstört wird. Somit kann durch die Erfindung die Aufgabe gelöst werden, ein Einreißen der Austrittsöffnung zu vermeiden.

Vorteilhaft ist die Austrittsöffnung als ein, insbesondere im unmontierten Zustand offener, Spalt ausgebildet. Unter einem Spalt ist in diesem Zusammenhang eine einen dreidimensionalen, insbesondere offenen, Zwischenraum bildende, schmale und zugleich längliche Öffnung zu verstehen. Ein Spalt hat den Vorteil, dass dieser leicht durch Zusammendrücken geschlossen werden kann, um im Einbauzustand die eingangs beschriebene ventilähnliche Wirkung zu erzielen. Insbesondere weist der Spalt in Umfangsrichtung des Dichtungsbalgs eine Längserstreckung auf, die zumindest im Wesentlichen senkrecht zu der Mittelachse des Dichtungsbalgs verläuft.

Erfindungsgemäß weist die Austrittsöffnung zwei parallel zueinander ausgerichtete und voneinander beabstandete Teilflächen auf. Die beiden Teilflächen sind dabei vorzugsweise in Axialrichtung des Dichtungsbalgs parallel beabstandet, wobei die Teilflächen in sich eben oder uneben, beispielsweise wellenförmig, ausgebildet sein können. Die parallele Beabstandung der Teilflächen hat den Vorteil, dass die Austrittsöffnung bei einer axialen Stauchung, insbesondere im Einbauzustand des Dichtungsbalgs, gleichmäßig geschlossen wird. Das Spaltmaß, also der Abstand zwischen den beiden parallel beabstandeten Teilflächen, ist abhängig von den Dimensionen des Dichtungsbalgs und liegt bevorzugt im Bereich von wenigen Zehntel Millimetern. Die beiden parallel beabstandeten Teilflächen sind Bestandteil der Innenumfangsfläche der Austrittsöffnung.

Vorzugsweise mündet die Austrittsöffnung in eine sacklochartige Tasche, die auf der Innenseite des Dichtungsbalgs in dessen Wandung eingelassen ist. Somit durchsetzt die Austrittsöffnung die Wandung nicht vollständig, sondern nur teilweise, wobei der verbleibende Teil der Wandung von der Tasche durchsetzt ist. Dies hat den Vorteil, dass die Austrittsöffnung leichter zusammendrückbar ist, um die eingangs beschriebene Ventilwirkung zu erreichen. Insbesondere weist die Tasche eine sich in Axialrichtung des Dichtungsbalgs erstreckende Mittelachse auf. Vorzugsweise ist die Tasche in einen verdickten Abschnitt der Wandung eingelassen. Bis auf die Austrittsöffnung, die im Bereich der Tasche angeordnet ist und zusammen mit dieser einen Schmiermittelaustritt ermöglicht, ist die Außenumfangsfläche des Dichtungsbalgs vorzugsweise unterbrechungsfrei ausgebildet.

Bevorzugt geht eine der beiden parallel beabstandeten Teilflächen unterbrechungsfrei und/oder stufenlos in eine Grundfläche der Tasche über. Die Teilfläche und die Grundfläche sind dabei insbesondere eben ausgebildet und senkrecht zu der Mittelachse des Dichtungsbalgs ausgerichtet. Durch diese Anordnung kann verbrauchtes Schmiermittel auf einfache Weise aus dem Dichtungsbalg heraustransportiert werden, weil die zu passierenden Flächen insgesamt eine Ebene bilden und somit nur einen geringen Widerstand für das abfließende, verbrauchte Schmiermittel darstellen.

Weiterhin kann vorgesehen sein, dass die Tiefe der Austrittsöffnung weniger als ein Drittel der Wandstärke des Dichtungsbalgs im Bereich der Austrittsöffnung beträgt, wobei im Zusammenwirken mit der Tasche (13) eine durchgehend offene Verbindung zwischen der Innenseite und der Außenseite des Dichtungsbalgs (1) bereitgestellt wird. Auf diese Weise lässt sich die Austrittsöffnung im montierten Zustand des Dichtungsbalgs besser zusammendrücken, insbesondere wenn die Austrittsöffnung als Spalt mit zwei parallel beabstandete Teilflächen ausgebildet ist.

Vorteilhaft ist die Austrittsöffnung im Bereich des zapfenseitigen Dichtbereichs und/oder in einem Bereich benachbart zu dem zapfenseitigen Dichtbereich (7) angeordnet. Frisches Schmiermittel wird dem Gehäuse des Kugelgelenks über einen Schmiernippel zugeführt und drückt bereits innerhalb des Kugelgelenks vorhandenes Schmiermittel in Richtung des Dichtungsbalgs. Innerhalb des Gehäuses wird das Schmiermittel mit Abrieb aus den dort vorhandenen Gleitlagerstellen versetzt und dann als verbrauchtes Schmiermittel aus dem Gehäuse in die gehäuseseitige Öffnung des Dichtungsbalgs gedrückt. Durch weiter nachrückendes Schmiermittel wird das verbrauchte Schmiermittel in Richtung des zapfenseitigen Dichtbereichs gedrückt. Am Ende des Weges, den das Schmiermittel innerhalb des Kugelgelenks zurücklegt und zugleich weitestmöglich entfernt von den Gleitlagerstellen innerhalb des Gehäuses, ist die Austrittsöffnung angeordnet. Auf diese Weise ist sichergestellt, dass verbrauchtes Schmiermittel nicht wieder in die Gleitlagerstellen innerhalb des Gehäuses gelangen kann. Das verbrauchte, mit Abrieb versetzte Schmiermittel, das auch als kontaminiertes Schmiermittel bezeichnet wird, wirkt abrasiv und würde daher in den Gleitlagerstellen zu erhöhtem Verschleiß führen.

Wenn das verbrauchte Schmiermittel durch nachrückendes Schmiermittel durch die Austrittsöffnung gedrückt wird, fungiert die Austrittsöffnung als Schmiermittelaustrittsöffnung. Die Austrittsöffnung unterscheidet sich somit von den aus dem Stand der Technik bekannten Schmiermittelaustrittsöffnungen dadurch, dass sie einerseits als Schmiermittelaustrittsöffnung und andererseits darüber hinaus auch als Luftaustrittsöffnung wirken kann, nämlich im unmontierten Zustand des Dichtungsbalgs. Genau genommen, kann die Austrittsöffnung auch im teilmontierten Zustand des Dichtungsbalgs als Luftaustrittsöffnung wirken, weil sich die Austrittsöffnung während des axialen Zusammendrückens des Dichtungsbalgs in Richtung einer Endlage, die der Dichtungsbalg im montierten Zustand einnimmt, allmählich schließt und erst bei Erreichen der Endlage vollständig geschlossen ist.

Günstig ist die Austrittsöffnung in Axialrichtung auf Höhe des zapfenseitigen Dichtbereichs angeordnet. Wie bereits zuvor erläutert, wird auf diese Weise eine Rückführung kontaminierten Schmiermittels in die Gleitlagerflächen des Kugelgelenks vermieden, weil die Austrittsöffnung und die Gleitlagerflächen weitestmöglich voneinander beabstandet sind.

Bevorzugt sind mehr als zwei Austrittsöffnungen über den Umfang des Dichtungsbalgs verteilt angeordnet. Auf diese Weise ist sichergestellt, dass verbrauchtes Schmiermittel zusammen mit den darin enthaltenen Abriebpartikeln sicher aus dem Dichtungsbalg gelangt. Vorzugsweise sind drei Austrittsöffnungen gleichmäßig, also im Abstand von jeweils 120 Grad, über den Umfang des Dichtungsbalgs verteilt angeordnet.

Zweckmäßig ist die Austrittsöffnung in Radialrichtung des Dichtungsbalgs ausgerichtet. Die Radialrichtung erstreckt sich dabei senkrecht zu der Axialrichtung und zugleich senkrecht zu der Mittelachse des Dichtungsbalgs. Durch die radiale Ausrichtung der Austrittsöffnung ist ein seitlicher Austritt des verbrauchten Schmiermittels aus dem Dichtungsbalg gewährleistet. Bei einer axialen Erstreckung der Austrittsöffnung könnte diese in bestimmten Betriebszuständen des Kugelgelenks verstopft sein, insbesondere wenn der Dichtungsbalg mehrere Ausbauchungen und Taillierungen aufweist oder auf einem zapfenseitigen Anschlussbauteil aufliegt.

Vorteilhaft ist die Austrittsöffnung hinterschnittfrei in Bezug auf eine sich durch die Mittelachse des Dichtungsbalgs erstreckende Formtrennungsebene ausgebildet. Auf diese Weise ist die Herstellbarkeit des Dichtungsbalgs in einem einzigen Herstellungsschritt, insbesondere einem Spritzgießen, möglich. Weiterhin ist die Entformbarkeit des Dichtungsbalgs nach erfolgtem Urformen, insbesondere Spritzgießen, gewährleistet, ohne dass Werkzeuge mit teuren Werkzeugschiebern erforderlich sind. Insbesondere weist die Außenumfangsfläche des Dichtungsbalgs an der Schnittlinie zwischen der Formtrennungsebene und dem Außenumfang zwei sich in Axialrichtung erstreckende Formtrennungsgrate auf.

Das Schließen der Austrittsöffnung wird im Rahmen der Montage dadurch bewirkt, dass der Dichtungsbalg durch Aufschieben des zapfenseitigen Anschlussbauteils, beispielsweise eines Lenkhebels, auf den Zapfen des Kugelzapfens in Axialrichtung zusammengedrückt wird.

Erfindungsgemäß liegen die obere Teilfläche und die untere Teilfläche der Austrittsöffnung im montierten Zustand des Kugelgelenks berührend aneinander an.

Ein weiterer Aspekt nicht Teil der Erfindung betrifft ein Verfahren zur Montage eines Kugelgelenks wie zuvor beschrieben, wobei während eines axialen Zusammendrückens des Dichtungsbalgs durch ein zapfenseitiges Anschlussbauteil in dem Dichtungsbalg eingeschlossene Luft aus der zumindest noch teilweise offenen Austrittsöffnung entweichbar ist. Mit der Formulierung, dass eingeschlossene Luft aus der zumindest noch teilweise offenen Austrittsöffnung entweichen kann, soll zum Ausdruck gebracht werden, dass sich die Austrittsöffnung während des axialen Zusammendrückens des Dichtungsbalgs in Richtung seiner Endlage im montierten Zustand des Kugelgelenks allmählich fortschreitend schließt und erst bei Erreichen der Endlage vollständig geschlossen ist.

Ein weiterer Aspekt der Erfindung bezieht sich auf eine Verwendung des vorgenannten Kugelgelenks für einen Mehrpunktlenker, insbesondere einen Zweipunktlenker, mit zumindest einem solchen Dichtungsbalg und/oder mit zumindest einem solchen Kugelgelenk. Insbesondere ist der Mehrpunktlenker als ein Zweipunktlenker mit zumindest einem Dichtungsbalg und/oder einem Kugelgelenk wie zuvor beschrieben und einem starr daran angebundenen, stangenartigen Verbindungselement ausgebildet. Das Verbindungselement kann dabei als ein gerades oder als ein gebogenes Rohr ausgebildet sein. Der Zweipunktlenker kann alternativ auch zwei jeweils endseitig und starr an das Verbindungselement angebundene Kugelgelenke der zuvor beschriebenen Art aufweisen. Der Zweipunktlenker kann ausgebildet sein als Lenkstange, Spurstange, Panhardstab, Koppelstange zur Anbindung eines Wankstabilisators an einen Fahrzeugrahmen oder als Koppelstange zur gelenkigen Verbindung von zwei Lenkungsteilen, beispielsweise zwei Lenkhebeln. Der Zweipunktlenker kann eine feste Länge aufweisen oder längeneinstellbar sein.

Im Folgenden wird die Erfindung anhand lediglich ein Ausführungsbeispiel darstellender Zeichnungen näher erläutert, wobei sich gleiche Bezugszeichen auf gleiche Bauteile oder Elemente beziehen. Dabei zeigt:
Fig. 1 in einem Halbschnitt einen Dichtungsbalg gemäß der Erfindung;
Fig. 2 in einer vergrößerten Detailansicht die Einzelheit X aus Figur 1;
Fig. 3 in einer Detailansicht eine Austrittsöffnung des Dichtungsbalgs gemäß Ansicht A aus Figur 2 und Figur 4;
Fig. 4 in einer Schnittdarstellung den Schnitt E - E aus Fig. 1;
Fig. 5 in einer Schnittdarstellung ein Kugelgelenk gemäß der Erfindung;
Fig. 6 in einer vergrößerten Ansicht einen Teil des Kugelgelenks aus Figur 5;
Fig. 7 in einer vergrößerten Detailansicht die Einzelheit Y aus Figur 6 und
Fig. 8 in einer perspektivischen Darstellung einen Zweipunktlenker gemäß der Erfindung.

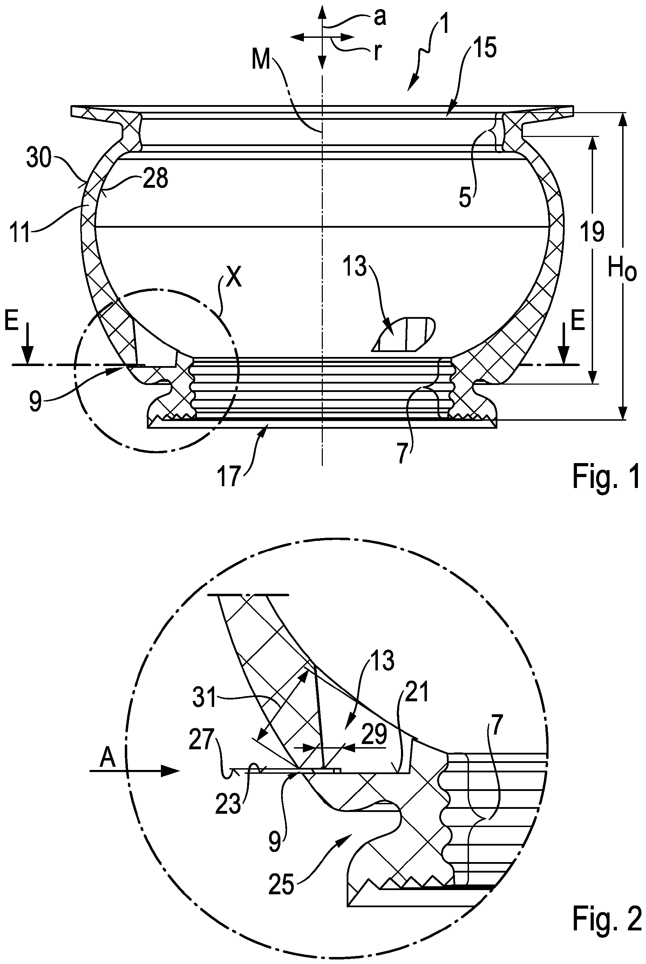

Fig. 1 zeigt in einem nicht montierten Zustand einen rotationssymmetrischen Dichtungsbalg 1 für ein Kugelgelenk 3, wobei die Rotationssymmetrie von einer Austrittsöffnung 9 unterbrochen ist. Der Dichtungsbalg 1 weist einen gehäuseseitigen Dichtbereich 5 und einen dazu in einer Axialrichtung a parallel beabstandeten zapfenseitigen Dichtbereich 7 auf. Die Austrittsöffnung 9, die eine Wandung 11 des Dichtungsbalgs 1 durchsetzt, ist zwischen dem gehäuseseitigen Dichtbereich 5 und dem zapfenseitigen Dichtbereich 7 angeordnet. Die Austrittsöffnung 9 ist in dem dargestellten, nicht montierten Zustand des Dichtungsbalgs 1 offen. Von außen betrachtet, mündet die Austrittsöffnung 9 in eine sacklochartige Tasche 13, die auf der Innenseite des Dichtungsbalgs 1 in dessen Wandung 11 eingelassen ist. Insgesamt sind drei Taschen 13 gleichmäßig, also im Abstand von jeweils 120 Grad, über den Umfang des Dichtungsbalgs 1 verteilt angeordnet, wobei in dem Halbschnitt gemäß Fig. 1 nur zwei davon erkennbar sind. Bei Betrachtung durch eine gehäuseseitige Öffnung 15, die von dem gehäuseseitigen Dichtbereich 5 umschlossen ist, schaut man in die zu der gehäuseseitigen Öffnung 15 hin offenen Taschen 13, deren gedachte Mittelachse sich in Axialrichtung a des Dichtungsbalgs 1 erstreckt.

Der zapfenseitige Dichtbereich 7, der eine zapfenseitige Öffnung 17 des Dichtungsbalgs 1 umschließt, ist ebenso wie der gehäuseseitige Dichtbereich 5 und der Dichtungsbalg 1 insgesamt rotationssymmetrisch in Bezug auf eine Mittelachse M des Dichtungsbalgs 1 ausgebildet. Der gehäuseseitige Dichtbereich 5 und der zapfenseitige Dichtbereich 7 sind Bestandteil der Innenumfangsfläche 28 des Dichtungsbalgs 1, wobei der zapfenseitige Dichtbereich 7 im Halbschnitt eine sich in Axialrichtung a erstreckende Wellenkontur aufweist, wohingegen der gehäuseseitige Dichtbereich 5 bei Betrachtung in einem solchen Schnitt lediglich einen bauchigen Abschnitt aufweist. In dem in Fig. 1 dargestellten entspannten Zustand des Dichtungsbalgs 1 weist dieser eine in Axialrichtung a gemessene entspannte Höhe Ho auf, die den gehäuseseitigen 5 und den zapfenseitigen Dichtbereich 7 einspannt. Im Wesentlichen zwischen dem gehäuseseitigen 5 und dem zapfenseitigen Dichtbereich 7 weist der Dichtungsbalg 1 einen bauchigen Abschnitt 19 auf, dessen Bauchigkeit sich in einer senkrecht zu der Axialrichtung a verlaufenden Radialrichtung r nach außen erstreckt.

Aus Fig. 2 geht hervor, dass eine Grundfläche 21 der Tasche 13 eben ausgebildet ist und sich senkrecht zu der Mittelachse M des Dichtungsbalgs 1, also in Radialrichtung r erstreckt. Ausgehend von der Grundfläche 21 erweitert die Tasche 13 in ihrem Querschnitt in Axialrichtung a stetig, wodurch die Entformbarkeit der Tasche 13 nach dem Spritzgießen gegeben ist. Durch die Tasche 13, die in einen verdickten Abschnitt der Wandung 11 eingelassen ist, wird die Wandstärke an dieser Stelle der Wandung 11 reduziert. In Axialrichtung a von der Grundfläche 21 beabstandet und in Radialrichtung r etwa auf gleicher Höhe mit dieser weist der Dichtungsbalg 1 eine umlaufende Spannringnut 25 auf. Die Spannringnut 25 ist Teil der Außenumfangsfläche 30 des Dichtungsbalgs 1 und als eine sich in Richtung der zapfenseitigen Öffnung 17 erstreckende Einbuchtung ausgebildet, die in Axialrichtung a etwa auf Höhe der axialen Mitte des zapfenseitigen Dichtbereichs 7 angeordnet ist. Eine untere Teilfläche 23 der Austrittsöffnung 9 erstreckt sich ebenso wie die Grundfläche 21 der Tasche 13 in Radialrichtung r und geht unterbrechungsfrei in diese über. Die untere Teilfläche 23 und die Grundfläche 21 der Tasche 23 liegen in Axialrichtung a auf Höhe des zapfenseitigen Dichtbereichs 7.

Die Austrittsöffnung 9 weist neben der unteren Teilfläche 23 eine parallel zu dieser beabstandete obere Teilfläche 27 auf. Das Spaltmaß zwischen den beiden parallel beabstandeten Teilflächen 23, 27 beträgt wenige Zehntel Millimeter. Die beiden parallel beabstandeten Teilflächen 23, 27 sind Bestandteil der Innenumfangsfläche 35 der Austrittsöffnung 9. Die Tiefe 29 der Austrittsöffnung 9 beträgt weniger als ein Drittel der Wandstärke 31 des Dichtungsbalgs 1 im Bereich der Austrittsöffnung 9. Die Tiefe 29 der Austrittsöffnung 9 erstreckt sich dabei in dem Halbschnitt gemäß Fig. 1 und Fig. 2 von dem Schnittpunkt der Außenumfangsfläche 30 mit der oberen Teilfläche 27 in Radialrichtung r bis zu dem Schnittpunkt der oberen Teilfläche 27 mit der Innenwandung der Tasche 13. Die Wandstärke 31 stellt bei gleicher Betrachtung den kürzesten Abstand zwischen dem Schnittpunkt der Außenumfangsfläche 30 mit der oberen Teilfläche 27 und der Innenumfangsfläche 28 des Dichtungsbalgs 1 dar.

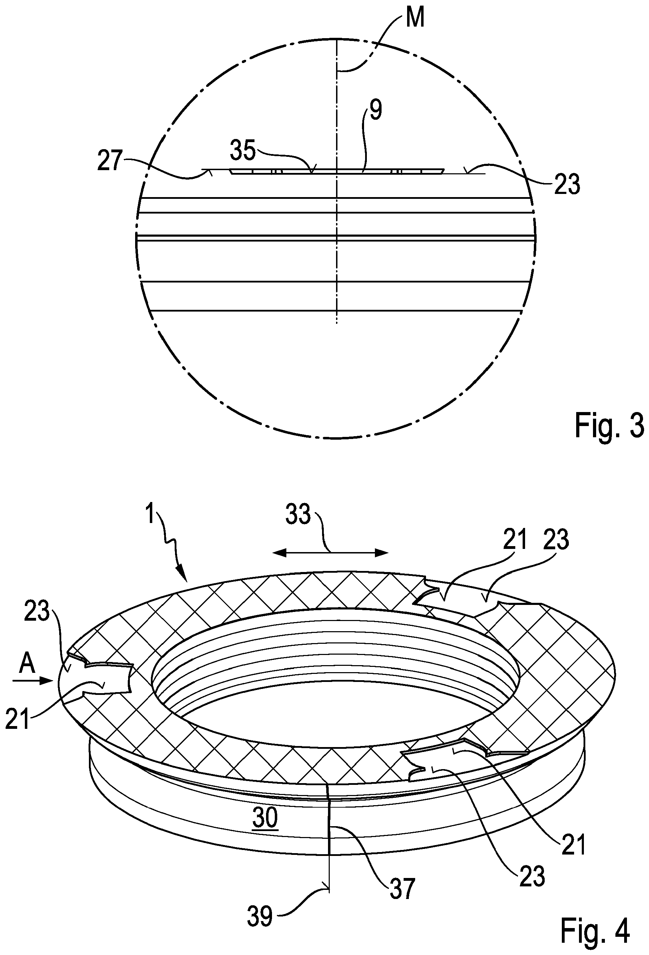

Fig. 3 zeigt einen Ausschnitt einer Seitenansicht des spritzgegossenen Dichtungsbalgs 1, betrachtet in dessen Entformungsrichtung 33, wobei sich die Entformrichtung 33 senkrecht zu der Zeichenebene erstreckt. Die Austrittsöffnung 9 ist in dieser Ansicht symmetrisch zu der Mittelachse M des Dichtungsbalgs 1 angeordnet, weil sie sich in Entformungsrichtung 33 erstreckt. Die Austrittsöffnung 9 weist eine unbearbeitete Innenumfangsfläche 35 auf und ist als ein Spalt 9 ausgebildet, der sich in Radialrichtung r bis in die Tasche 13 erstreckt. Die untere Teilfläche 23 und die zu dieser parallel beabstandete obere Teilfläche 27 sind Bestandteil der Innenumfangsfläche 35.

Fig. 4 verdeutlicht, dass die untere Teilfläche 23 der Austrittsöffnung 9 unterbrechungsfrei und stufenlos in die Grundfläche 21 der Tasche 23 übergeht und dass insgesamt drei Taschen 13 gleichmäßig, also im Abstand von jeweils 120 Grad, über den Umfang des Dichtungsbalgs 1 verteilt angeordnet sind. Die auf der linken Seite erkennbare Austrittsöffnung 9 ist, wie bereits zu Fig. 3 ausgeführt, symmetrisch ausgebildet. Bei den beiden auf der rechten Seite dargestellten Austrittsöffnungen 9, die sich nicht senkrecht zu der Entformungsrichtung 33 erstreckten, ist die zu Fig. 3 beschriebene Symmetrie nicht gegeben. Die Austrittsöffnungen 9 der rechten Seite sind jedoch ebenso wie die Austrittsöffnung 9 auf der linken Seite hinterschnittfrei in Bezug auf eine sich durch die Mittelachse M des Dichtungsbalgs 1 erstreckende Formtrennungsebene 39 ausgebildet. Die Außenumfangsfläche 30 des Dichtungsbalgs 1 weist an zwei Schnittlinien mit der Formtrennungsebene 39, die sich senkrecht zu der Entformungsrichtung 33 erstreckt und zugleich durch die Mittelachse M des Dichtungsbalgs 1 verläuft, zwei sich in Axialrichtung a erstreckende Formtrennungsgrate 37 auf von denen einer sichtbar und der andere verdeckt ist.

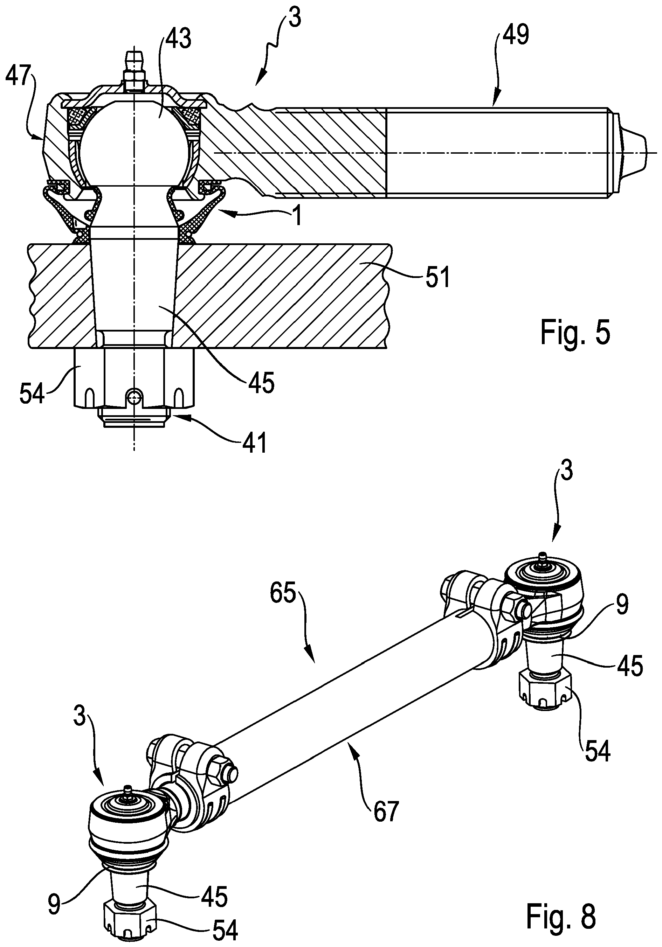

Das bereits zuvor erwähnte Kugelgelenk 3 ist in Fig. 5 dargestellt, wobei es sich um ein Kugelgelenk 3 für ein Kraftfahrzeug, insbesondere für ein Fahrwerk oder eine Lenkung eines Kraftfahrzeugs handelt. Es weist einen Kugelzapfen 41 auf, der einstückig aus einer Gelenkkugel 43 und einem Zapfen 45 gebildet ist. Die Gelenkkugel 43 ist dreh- und schwenkbeweglich in einem Gehäuse 47 des Kugelgelenks 3 gleitgelagert. Ein Schaft 49 ist einstückig mit dem Gehäuse 47 ausgebildet und über einen Großteil seiner Länge mit einem Außengewinde versehen, welches zur Verbindung des Kugelgelenks 3 mit einem hier nicht dargestellten, schaftseitigen Anschlussbauteil 67 geeignet ist. Der Zapfen 45 ist mit einem zapfenseitigen Anschlussbauteil 51 verbunden, das hier als ein Lenkhebel 51 ausgebildet ist, wobei die Verbindung als ein Kegelsitz ausgebildet ist. Hierzu weist der Zapfen 45 einen kegeligen Abschnitt auf, der in einer formkorrespondierenden kegeligen Bohrung des Lenkhebels 51 sitzt. Die Verbindung wird über eine als Kronenmutter 54 ausgebildete Mutter gesichert, die den kegeligen Abschnitt des Zapfens 45 in die kegelige Bohrung des Lenkhebels 51 zieht. In dieser Endlage, die der Dichtungsbalg 1 im fertig montierten Zustand des Kugelgelenks 3 einnimmt, ist die Austrittsöffnung 9 vollständig geschlossen.

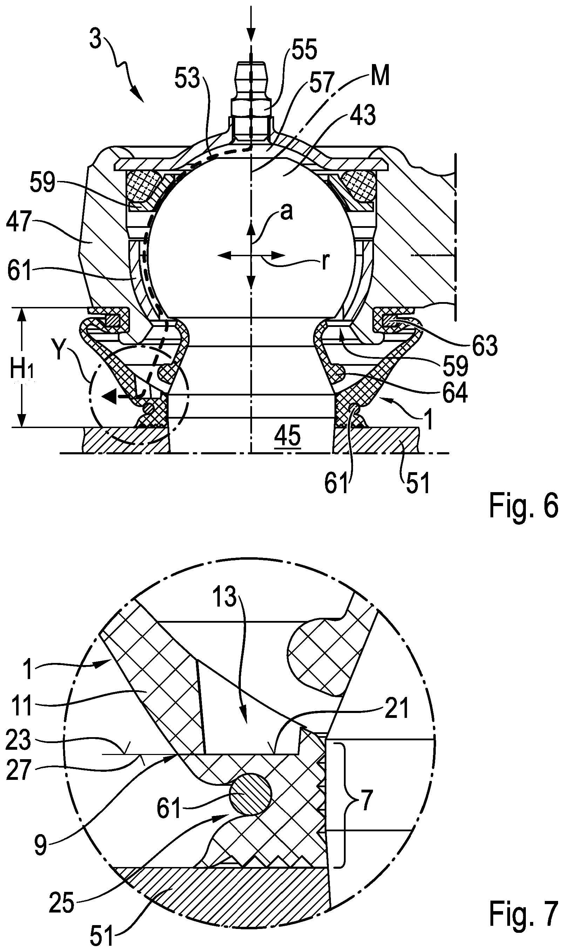

Fig. 6 zeigt den Dichtungsbalg 1 im montierten Zustand, wobei der Dichtungsbalg 1 hier in Axialrichtung a eine montierte Höhe Hi aufweist, die geringer ist als die entspannte Höhe Ho im unmontierten Zustand. Dies ist darin begründet, dass der Dichtungsbalg 1 im Rahmen der Montage des Kugelgelenks 3 von dem Lenkhebel 51 gegen das Gehäuse 47 gedrückt wird, wodurch sich die in Axialrichtung a gemessene Höhe des Dichtungsbalgs 1 reduziert. Dies hat wiederum zur Folge, dass die im unmontierten Zustand des Dichtungsbalgs 1 offene Austrittsöffnung 9 ebenfalls zusammengedrückt wird und jetzt geschlossen ist. Unter anderem an einem im Bereich einer abgeflachten Polstelle der Gelenkkugel 43 angeordneten Schmiernippel 55 ist zu erkennen, dass es sich bei dem Kugelgelenk 1 um ein abschmierbares Kugelgelenk handelt.

Zur Veranschaulichung ist der Weg, den das Schmiermittel 53 innerhalb des Kugelgelenks 3 zurücklegt, schematisch als gestrichelte Linie eingezeichnet, wobei es sich bei dem Schmiermittel in dieser Anwendung um ein Schmierfett 53 mit relativ hoher Viskosität handelt. Frisches Schmierfett 53 wird über den Schmiernippel 55 in eine obere Schmiermittelkammer 57 gedrückt, in der Regel mit einer Fettpresse. Von dort aus wird es über nachrückendes Schmierfett 53 entlang der Oberfläche der Gelenckugel 43 weitergeschoben und dabei u. a. durch in Axialrichtung a verlaufende Schmiermittelnuten einer oberen Lagerschale 59 und einer unteren Lagerschale 61 gedrückt. Im Fahrbetrieb wird das Schmierfett 53 durch Relativbewegungen zwischen der oberen Lagerschale 59 und der unteren Lagerschale 61 mit Abriebpartikeln versetzt. Auf diese Weise wird das ursprünglich frische Schmierfett 53 zu verbrauchtem Schmierfett 53. Das verbrauchte Schmierfett 53 wird bei weiterem Nachschmieren des Kugelgelenks 3 durch einen Ringspalt zwischen dem Kugelzapfen 41 und einer zapfenseitigen Gehäuseöffnung 59 gedrückt und sammelt sich dann in dem Dichtungsbalg 1.

Wenn der Dichtungsbalg 1 vollständig mit verbrauchtem Schmierfett 53 gefüllt ist, bewirkt eine weitere Schmiermittelzufuhr durch den Schmiernippel 55 den Aufbau eines Überdrucks innerhalb des Gehäuses 47. Durch diesen Überdruck wird die Austrittsöffnung 9 quasi aufgedrückt, sodass der Überschuss an verbrauchtem Schmierfett 53, der nicht von dem Gehäuse 47 und dem Dichtungsbalg 1 aufgenommen werden kann, durch die Austrittsöffnung 9 entweicht.

Die Spannringnut 25 des Dichtungsbalgs 1 nimmt einen im Querschnitt runden Spannring 61 auf, der den zapfenseitigen Dichtbereich 7 dichtend gegen den Kugelzapfen 41 drückt. Der gehäuseseitige Dichtbereich 5 des Dichtungsbalgs 1 wird im Bereich der zapfenseitigen Gehäuseöffnung 59 durch einen Spannring 63 mit quadratischem Querschnitt in eine umlaufende Außennut des Gehäuses 47 gedrückt. Der auch als Zapfenhals bezeichnete Übergang von der Gelenkkugel 43 zu dem Zapfen 45 des Kugelzapfens 41 ist von einem aus Kunststoff gebildeten Stützring 64 umschlossen. Der Stützring 64 verhindert, dass das zapfenseitige Ende des Dichtungsbalg 1 bei extremen Auslenkungen des Kugelzapfens 41 in den Zapfenhals, der einen geringeren Durchmesser als der Zapfen 45 aufweist, hineingezogen wird.

Wie in Fig. 7 deutlich zu erkennen, ist die Austrittsöffnung 9 im montierten Zustand des Kugelgelenks 3 geschlossen, wobei die obere Teilfläche 27 und untere Teilfläche 23 der im unmontierten Zustand des Dichtungsbalgs 1 als Spalt 9 ausgebildeten Austrittsöffnung nun berührend aneinander anliegen.

Fig. 8 zeigt einen als Zweipunktlenker 65 ausgebildeten Mehrpunktlenker mit zwei abschmierbaren Kugelgelenken 3 wie zuvor beschrieben, die über ein als Verbindungsrohr 67 ausgebildetes, stangenartiges Verbindungselement miteinander verbunden sind. Das Verbindungsrohr 67 bildet zugleich das bereits zuvor erwähnte schaftseitige Anschlussbauteil. Jedes der beiden Kugelgelenke 3 sitzt mit seinem Schaft 49 in einem endseitigen Abschnitt des Verbindungsrohres 67, wobei die endseitigen Abschnitte jeweils einen Längsschlitz aufweisen. Mit jeweils einer Klemmschelle werden die endseitigen Abschnitte des Verbindungsrohres 67 umfänglich an die Schäfte 49 der Kugelgelenke 3 gedrückt und auf diese Weise starre Verbindungen zwischen dem Verbindungrohr 67 und den Kugelgelenken 3 hergestellt.

### Bezugszeichen

- 1: Dichtungsbalg
- 3: Kugelgelenk
- 5: gehäuseseitiger Dichtbereich
- 7: zapfenseitiger Dichtbereich
- 9: Austrittsöffnung, Spalt
- 11: Wandung des Dichtungsbalgs
- 13: Tasche
- 15: gehäuseseitige Öffnung
- 17: zapfenseitige Öffnung
- 19: bauchiger Abschnitt
- 21: Grundfläche der Tasche
- 23: untere Teilfläche
- 25: Spannringnut
- 27: obere Teilfläche
- 28: Innenumfangsfläche des Dichtungsbalgs
- 29: Tiefe der Austrittsöffnung
- 30: Außenumfangsfläche des Dichtungsbalgs
- 31: Wandstärke des Dichtungsbalgs
- 33: Entformungsrichtung des Dichtungsbalgs
- 35: Innenumfangsfläche der Austrittsöffnung
- 37: Formtrennungsgrat
- 39: Formtrennungsebene
- 41: Kugelzapfen
- 43: Gelenkkugel
- 45: Zapfen
- 47: Gehäuse
- 49: Schaft
- 51: zapfenseitiges Anschlussbauteil, Lenkhebel
- 53: Schmiermittel, Schmierfett
- 54: Mutter, Kronenmutter
- 55: Schmiernippel

- 57: obere Schmiermittelkammer
- 59: zapfenseitige Gehäuseöffnung
- 61: Spannring
- 63: Spannring
- 64: Stützring
- 65: Mehrpunktlenker, Zweipunktlenker
- 67: Verbindungselement, Rohr

- a: Axialrichtung
- r: Radialrichtung
- M: Mittelachse des Dichtungsbalgs
- H₀: entspannte Höhe
- H₁: montierte Höhe

## Patentansprüche

1. Kugelgelenk (3), insbesondere abschmierbares Kugelgelenk (3), mit einem Dichtungsbalg (1) für ein Kugelgelenk (3), der Dichtungsbalg (1) aufweisend einen gehäuseseitigen Dichtbereich (5) und einen davon beabstandeten zapfenseitigen Dichtbereich (7) sowie eine zwischen dem gehäuseseitigen Dichtbereich (5) und dem zapfenseitigen Dichtbereich (7) angeordnete und zugleich eine Wandung (11) des Dichtungsbalgs (1) durchsetzende Austrittsöffnung (9), die in einem unmontierten Zustand des Dichtungsbalgs (1) offen ist, wobei die Austrittsöffnung (9) zwei parallel zueinander ausgerichtete und voneinander beabstandete Teilflächen (23, 27) aufweist und im nicht montierten Zustand des Kugelgelenks (3) offen und im montierten Zustand des Kugelgelenks (3) geschlossen ist, **dadurch gekennzeichnet, dass** die obere Teilfläche (27) und die untere Teilfläche (23) der Austrittsöffnung (9) im montierten Zustand des Kugelgelenks (3) berührend aneinander anliegen.

2. Kugelgelenk (3) nach Anspruch 1, **dadurch gekennzeichnet, dass** die Austrittsöffnung (9) eine unbearbeitete Innenumfangsfläche (35) aufweist, die eine Kontur der Austrittsöffnung (9) definiert.

3. Kugelgelenk (3) nach Anspruch 1 oder 2, **dadurch gekennzeichnet, dass** die Austrittsöffnung als ein, insbesondere im unmontierten Zustand offener, Spalt (9) ausgebildet ist.

4. Kugelgelenk (3) nach einem der vorhergehenden Ansprüche, **dadurch gekennzeichnet, dass** die Austrittsöffnung (9) in eine sacklochartige Tasche (13) mündet, die auf der Innenseite des Dichtungsbalgs (1) in dessen Wandung (11) eingelassen ist.

5. Kugelgelenk (3) nach Anspruch 4, **dadurch gekennzeichnet, dass** eine der beiden parallel beabstandeten Teilflächen (23) unterbrechungsfrei und/oder stufenlos in eine Grundfläche (21) der Tasche (13) übergeht.

6. Kugelgelenk (3) nach einem der Ansprüche 4 oder 5, **dadurch gekennzeichnet, dass** die Tiefe (29) der Austrittsöffnung (9) weniger als ein Drittel der Wandstärke (31) des Dichtungsbalgs (1) im Bereich der Austrittsöffnung (9) beträgt, wobei im Zusammenwirken mit der Tasche (13) eine durchgehend offene Verbindung zwischen der Innenseite und der Außenseite des Dichtungsbalgs (1) bereitgestellt wird.

7. Kugelgelenk (3) nach einem der vorhergehenden Ansprüche, **dadurch gekennzeichnet, dass** die Austrittsöffnung (9) im Bereich des zapfenseitigen Dichtbereichs (7) und/oder in einem Bereich benachbart zu dem zapfenseitigen Dichtbereich (7) angeordnet ist.

8. Kugelgelenk (3) nach einem der vorhergehenden Ansprüche, **dadurch gekennzeichnet, dass** die Austrittsöffnung (9) in Axialrichtung (a) des Dichtungsbalgs (7) auf Höhe des zapfenseitigen Dichtbereichs (7) angeordnet ist.

9. Kugelgelenk (3) nach einem der vorhergehenden Ansprüche, **dadurch gekennzeichnet, dass** mehr als zwei Austrittsöffnungen (9) über den Umfang des Dichtungsbalgs (1) verteilt angeordnet sind.

10. Kugelgelenk (3) nach einem der vorhergehenden Ansprüche, **dadurch gekennzeichnet, dass** die Austrittsöffnung (9) in Radialrichtung (r) des Dichtungsbalgs (1) ausgerichtet ist.

11. Kugelgelenk (3) nach einem der vorhergehenden Ansprüche, **dadurch gekennzeichnet, dass** die Austrittsöffnung (9) hinterschnittfrei in Bezug auf eine sich durch die Mittelachse (M) des Dichtungsbalgs (1) erstreckende Formtrennungsebene (39) ausgebildet ist.

12. Verwendung eines Kugelgelenks (3) nach einem der vorangehenden Ansprüche für einen Mehrpunktlenker (65), insbesondere einen Zweipunktlenker (65), mit zumindest einem solchen Kugelgelenk (3).

## Claims

1. Ball joint (3), in particular a lubricatable ball joint (3), with a sealing bellows (1) for a ball joint (3), the sealing bellows (1) having a housing-side sealing region (5) and a stud-side sealing region (7), which is spaced apart from the housing-side sealing region, and also having an exit opening (9), which is arranged between the housing-side sealing region (5) and the stud-side sealing region (7) and, at the same time, passes through a wall (11) of the sealing bellows (1) and, in a non-fitted state of the sealing bellows (1), is open, wherein the exit opening (9) has two spaced-apart sub-surfaces (23, 27), oriented parallel to one another, and, in a non-fitted state of the ball joint (3), the exit opening is open and, in the fitted state of the ball joint (3), it is closed, **characterized in that**, in the fitted state of the ball joint (3), the upper sub-surface (27) and the lower sub-surface (23) of the exit opening (9) are in contact with one another.

2. Ball joint (3) according to Claim 1, **characterized in that** the exit opening (9) has an untreated inner circumferential surface (35), which defines a contour of the exit opening (9).

3. Ball joint (3) according to Claim 1 or 2, **characterized in that** the exit opening is designed in the form of a gap (9), which is open in particular in the non-fitted state.

4. Ball joint (3) according to one of the preceding claims, **characterized in that** the exit opening (9) opens out into a blind-hole-like pocket (13) which is incorporated on the inner side of the sealing bellows (1), in the wall (11) of the latter.

5. Ball joint (3) according to Claim 4, **characterized in that** one of the two sub-surfaces (23), which are spaced apart parallel to one another, merges without interruption, and/or in a stepless manner, into a base surface (21) of the pocket (13).

6. Ball joint (3) according to either of Claims 4 and 5, **characterized in that** the depth (29) of the exit opening (9) is smaller than a third of the wall thickness (31) of the sealing bellows (1) in the region of the exit opening (9), wherein, in interaction with the pocket (13), a continuously open connection is established between the inner side and the outer side of the sealing bellows (1).

7. Ball joint (3) according to one of the preceding claims, **characterized in that** the exit opening (9) is arranged in the region of the stud-side sealing region (7) and/or in a region adjacent to the stud-side sealing region (7).

8. Ball joint (3) according to one of the preceding claims, **characterized in that** the exit opening (9) is arranged level with the stud-side sealing region (7), as seen in the axial direction (a) of the sealing bellows (7) .

9. Ball joint (3) according to one of the preceding claims, **characterized in that** more than two exit openings (9) are distributed over the circumference of the sealing bellows (1).

10. Ball joint (3) according to one of the preceding claims, **characterized in that** the exit opening (9) is oriented in the radial direction (r) of the sealing bellows (1).

11. Ball joint (3) according to one of the preceding claims, **characterized in that** the exit opening (9) is designed in an undercut-free manner in relation to a mould-parting plane (39) extending through the centre axis (M) of the sealing bellows (1).

12. Use of a ball joint (3) according to one of the preceding claims for a multi-point suspension link (65), in particular a two-point suspension link (65), having at least one such ball joint (3).

## Revendications

1. Rotule (3), en particulier rotule lubrifiable (3), comprenant un soufflet d'étanchéité (1) destiné à une rotule (3), le soufflet d'étanchéité (1) comportant une zone d'étanchéité côté boîtier (5) et une zone d'étanchéité côté axe (7) espacée de celle-ci et une ouverture de sortie (9) qui est disposée entre la zone d'étanchéité côté boîtier (5) et la zone d'étanchéité côté axe (7), qui traverse en même temps une paroi (11) du soufflet d'étanchéité (1) et qui est ouverte lorsque le soufflet d'étanchéité (1) n'est pas monté, l'ouverture de sortie (9) comportant deux parties de surface (23, 27) orientées parallèlement l'une à l'autre et espacées l'une de l'autre et étant ouverte lorsque la rotule (3) n'est pas montée et fermée lorsque la rotule (3) est montée, **caractérisée en ce que** la partie de surface supérieure (27) et la partie de surface inférieure (23) de l'ouverture de sortie (9) sont en appui l'une sur l'autre, de manière à être en contact, lorsque la rotule (3) est montée.

2. Rotule (3) selon la revendication 1, **caractérisée en ce que** l'ouverture de sortie (9) comporte une surface périphérique intérieure non traitée (35) qui définit un contour de l'ouverture de sortie (9).

3. Rotule (3) selon la revendication 1 ou 2, **caractérisée en ce que** l'ouverture de sortie est réalisée sous la forme d'un interstice (9) qui est notamment ouvert à l'état non monté.

4. Rotule (3) selon l'une des revendications précédentes, **caractérisée en ce que** l'ouverture de sortie (9) débouche dans une poche (13) en forme de trou borgne qui est noyée du côté intérieur du soufflet d'étanchéité (1) dans la paroi (11) de celui-ci.

5. Rotule (3) selon la revendication 4, **caractérisée en ce que** l'une des deux parties de surface (23) espacées parallèlement l'une de l'autre se transforme sans interruption et/ou en continu en une surface de base (21) de la poche (13) .

6. Rotule (3) selon l'une des revendications 4 et 5, **caractérisée en ce que** la profondeur (29) de l'ouverture de sortie (9) est inférieure au tiers de l'épaisseur de paroi (31) du soufflet d'étanchéité (1) au niveau de l'ouverture de sortie (9), une liaison ouverte en continu étant prévue en coopération avec la poche (13) entre le côté intérieur et le côté extérieur du soufflet d'étanchéité (1).

7. Rotule (3) selon l'une des revendications précédentes, **caractérisée en ce que** l'ouverture de sortie (9) est ménagée au niveau de la zone d'étanchéité côté axe (7) et/ou dans une zone adjacente à la zone d'étanchéité côté axe (7).

8. Rotule (3) selon l'une des revendications précédentes, **caractérisée en ce que** l'ouverture de sortie (9) est ménagée dans la direction axiale (a) du soufflet d'étanchéité (7) au niveau de la zone d'étanchéité côté axe (7).

9. Rotule (3) selon l'une des revendications précédentes, **caractérisée en ce que** plus de deux ouvertures de sortie (9) sont ménagées de manière répartie sur la circonférence du soufflet d'étanchéité (1) .

10. Rotule (3) selon l'une des revendications précédentes, **caractérisée en ce que** l'ouverture de sortie (9) est orientée dans la direction radiale (r) du soufflet d'étanchéité (1).

11. Rotule (3) selon l'une des revendications précédentes, **caractérisée en ce que** l'ouverture de sortie (9) est réalisée sans contre-dépouille par rapport à un plan de séparation de moule (39) passant par l'axe central (M) du soufflet d'étanchéité (1).

12. Utilisation d'une rotule (3) selon l'une des revendications précédentes destinée à une bielle multipoints (65), en particulier une bielle à deux points (65), comprenant au moins une telle rotule (3).
